Europäisches Patentamt

(19) European Patent Office

Office européen des brevets

(11) Publication number: **0 099 433**
A1

# (12) EUROPEAN PATENT APPLICATION

(21) Application number: **82303852.6**

(22) Date of filing: **21.07.82**

(51) Int. Cl.³: **G 01 G 23/42**

(43) Date of publication of application:
**01.02.84 Bulletin 84/5**

(84) Designated Contracting States:
**DE FR GB IT**

(71) Applicant: **Lemelson, Jerome Hal
85 Rector Street
Metuchen New Jersey, 08840(US)**

(72) Inventor: **Lemelson, Jerome Hal
85 Rector Street
Metuchen New Jersey, 08840(US)**

(74) Representative: **Smith, Norman Ian et al,
F.J. CLEVELAND & COMPANY 40-43 Chancery Lane
London WC2A 1JQ(GB)**

(54) Weighing apparatus and method.

㊼ An apparatus and method for providing indicia on articles or packages, which indicia is an indication of such variables as identification, destination, weight, cost, postage or a combination of such variables. An article or container is disposed on a weighing device, and the weight of the article which is indicated when the scale balances, is automatically applied as a bar code, numerical indication or other form of indicia to a select portion of the surface of the article. The indicia may be printed by means of selectively operated printing wheels, an ink jet, a laser or electron beam marking device or other means which operate through an opening in the platform of the scale or from a location at the side of the scale. Xerographic or electrostatic printing means may also be employed, which is located within an opening in the scale platform or at the side of the scale and which is projected or propels particles to print indicia against a select portion of the article or container in accordance with information which was derived from a computer, manual keyboard input, speech synthesized electronic circuitry or other means.

EP 0 099 433 A1

COMPLETE DOCUMENT

Croydon Printing Company Ltd.

**0099433**

## DESCRIPTION

This invention relates to an apparatus and method for automatically weighing and printing an indication of weight or other information derived, at least in part from such weighing, on the surface of an article or container being weighed on a scale. The apparatus is particularly applicable for the weighing and marking of containers and articles of food and packages to be mailed, wherein human effort required to mark such articles or containers or provide postage thereon is eliminated.

Operations involving the weighing and marking of articles with price information and the weighing and applying of postage to containers, generally involve a number of steps, including the placement of an article on a scale, the visual reading of the scale, the manual operation of the postage or price printing device and/or the removal of a label or postage therefrom and the placement of same on the device which was weighed. These operations are not only time consuming but are subject to human error.

The instant invention involves the automatic weighing of an article or container and the automatic printing of indicia indicative of weight and/or other information directly on the article by an automatically operated device. Accordingly it is a primary object of this invention to provide a new and improved apparatus and method for weighing and marking articles of manufacture and containers of articles and material so as to reduce human effort and errors.

According to one aspect of the present invention there is provided a weighing and marking apparatus comprising in combination with a support including a platform adapted to receive an article, means supported by said support responsive to the weight of an article disposed on said platform for generating an electrical signal which is representative of the article's weight, means for printing a plurality of indicia directly against the surface of an article disposed on said platform, control means for said printing means for varying the operation thereof to cause said printing means to vary the indicia it applies to the surface of an article, said control means being operatively connected to said means responsive to the weight of an article so as to predeterminately vary the operation of said printing means while an article is disposed on said platform and means operable after said printing means has been predeterminately varied to permit said printing means to print indicia on the surface of an article located on said platform which indicia is indicative of the article's weight, said printing means including means for variably forming printing ink into the configuration of selected characters and means for moving said variably formed ink configurations from a first location away from the surface of an article disposed on said scale through space to a selected portion of said article's surface to dispose said ink in the configuration of said characters on the surface of said article.

According to another aspect of the present invention there is provided a method of marking articles such as product containers with recorded information which varies in accordance with the weight of the articles comprising

(a) disposing an article to be marked on the platform of a scale with at least a portion of the surface of the article predeterminately located on said scale platform and said article exerting its full weight against the scale platform,

(b) sensing said article on said scale and variably controlling a marking means for said article in accordance with the weight of said article to operatively deposit a marking material against a select portion of the surface of said article in a pattern defining an indicia which may be visually read and an indication of the article's weight.

The present apparatus and method may be utilized to weigh different articles or quantities of material and to provide indicia directly on such articles, the indicia being an indication of the weight, pricing or postage associated with such

0099433

0099433

0099433

0099433

articles. The method can involve computing the value or cost of the article and the marking or printing of such information directly on the article.

The invention provides apparatus and method for weighing and predeterminately locating indicia or codes on an article which are indicative of the weight, and in certain instances, identification of the article, postage or other information and which are so located as to be easily automatically scanned as the article is conveyed so as to generate signals which may be used in computing the total cost or value of an order and/or destination of the article.

The apparatus and method can be used to weigh and provide an indication of the weight of articles without physically contacting said articles.

The apparatus and method can be used to print an indication of the weight or identification of the article on a label and automatically affix such label to the surface of the article.

The apparatus and method can be used to identify an article and provide indicia on the surface of the article by depositing particles or droplets of printing material on the article.

The apparatus and method can be used to automatically affix proper postage to a select portion of a container to be shipped.

The invention also provides an improved weighing scale containing a support and a printing device for applying select indicia to a surface of an article as or immediately after it is weighed.

The apparatus and method can be used to print indicia on articles as they are weighed, which indicia is an indication of weight or other information derived from computations involving the weight of the article.

The invention will be described now by way of example only with particular reference to the accompanying drawings.  In the drawings:

Figure 1 is an isometric view, with parts broken away for clarity, of a weighing scale which contains or supports means for applying a code or alpha-numeric characters to a surface of an article being weighed on the platform thereof;

Figure 2 is a schematic diagram of electrical and mechanical components and subsystems employed in the operation of the scale of Figure 1;

Figure 3 is an isometric view of an automatic weighing and printing arrangement associated with a conveyor or conveyors of articles, and

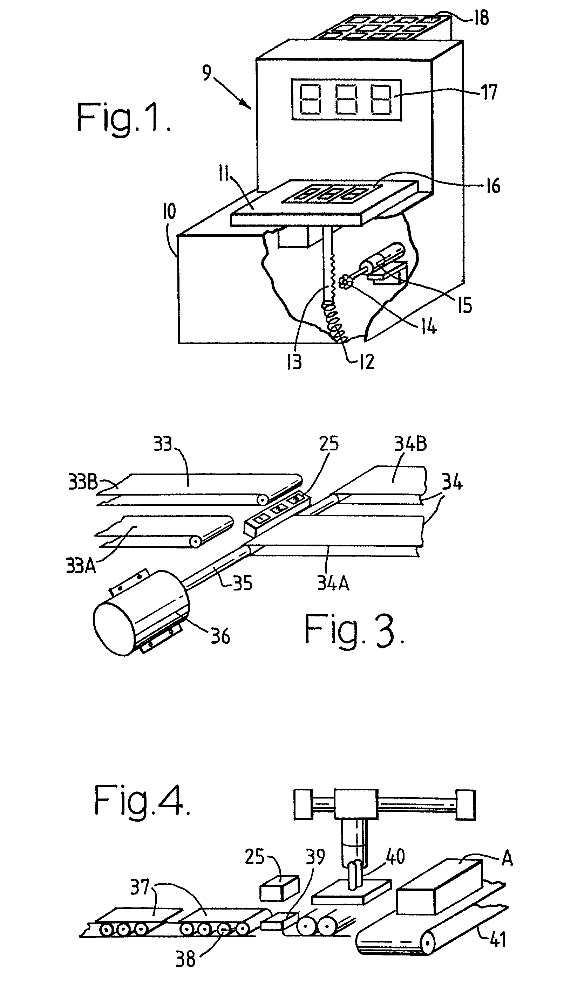

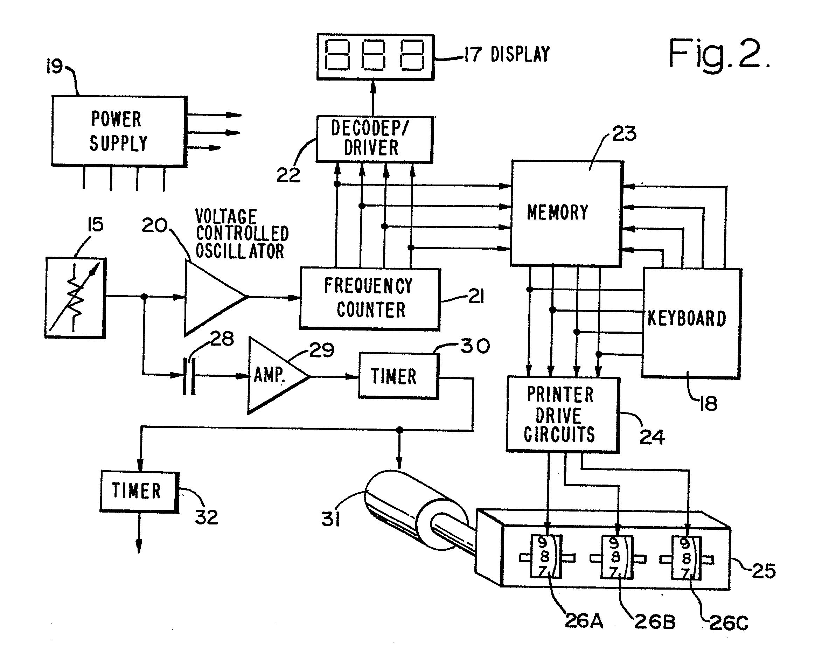

There is shown in FIG. 1 a weighing and printing scale assembly 9 having a weighing platform 11 supported by a base 10 which includes a housing for certain weighing, weight indicating and electronic components to be described. The weighing platform 11 is conventionally supported for vertical movement, by means of a conventional spring mechanism 12 which is connected to the platform through a rack gear toothed bar 13, the teeth of which engage and rotate a spur gear 14 as the platform 11 moves downwardly when a weight is placed thereon and upwardly after the weight is removed. The spur gear 14 is connected to a rotary potentiometer 15 which is electrically connected to scale electronics of the type illustrated in FIG. 2 for indicating the weight of an article placed on the platform 11 by means of a numerical character display 17 supported by the vertical, rear extension of the housing defining the support 10 or main frame of the scale. Potentiometer 15 has a variable resistance which varies in accordance with the rotation of spur gear 14 as an indication of the displacement of the rack gear 13 and the weight of the article disposed on platform 11.

Supported, within a cavity 16 in the platform 11 or supported by the top wall of the front portion of the housing 10H immediately below the platform 11, are one or more printing devices, such as an array of electrically operated printing wheels of the type shown in FIG.2, one or more ink jet character or code printers, an electrostatic or xerographic printing device, a laser or electron beam printer or other means or a label printer and applicator, which devices project their printing means, ink or label applying means upwardly through such cavity or recess 16 against the bottom surface of an article disposed thereacross on the upper surface of the platform 11, after the platform 11 has substantially come to rest with the container or article disposed thereon across the cavity 16.

Illustrated as supported in a subhousing adjacent the rear wall of the scale support 10 is a manual keyboard 18 which may be manually operated to enter variable data, such as cost of article weighed per pound, postal information such as destination, mileage or postal zone or other variable information. Such keyboard may also be disposed supported by either of the side walls of the housing or the front wall thereof or may be provided in a separate housing connected to the scale electronics by means of a suitable cable.

The control system illustrated in FIG. 2 includes scale electronics for computing information to be applied directly to the article disposed on the scale platform and for controlling the printing means therefor which is illustrated as an array of variably operable printing wheels 26, denoted 26A, 26B, 26C, etc. supported by a printing head 25 which is operable to be advanced and retracted through the opening 16 in the platform 11 by means of a bi-stable solenoid 31 supported by the platform or the main support 10 for the scale. As previously indicated, a suitable ink jet printing device containing a deflection controlled jet or jets of ink operable to provide dot-matrix characters as a line of such characters or a coded indicia against the bottom surface of the article disposed on the platform, may replace the printing
wheel assembly or any other suitable printing means including a
label printer and applicator may be used in its place.

The electronic control circuits illustrated in FIG. 2 are
electrically operated by means of a power supply, such as a
battery or transformer connected to a source of line current, the
output of which is connected to properly energize all of the
active circuits and components illustrated. Variable rotary potentiometer 15, which is connected to the shaft of spur gear 14, is
operable to vary the frequency of a voltage controlled oscillator
20 but which may also comprise a single or dual slope integrator
or other suitable means for converting changes in the electrical
parameters of the variable potentiometer into a digital signal or
signals.

The output of voltage controlled oscillator 20 is connected
to a frequency counter circuit 21 which converts the signal
received from the oscillator to a digital code representing the
voltage controlled oscillator frequency, which is dependent upon
the variation caused in the setting of the variable potentiometer
15 as determined by the weight of the article placed on the platform.

The coded output of the BCD frequency counter 21 is passed
to a decoder-driver circuit 22 which converts the code and
current levels to those necessary for the proper operation of
display 17 which displays a representation of the weight of the
article disposed on the platform 11. Although the circuits and
displays may be operable to display any desired information
derived at least in part from computation of the articles weight,

0099433

such as price or postage, it is primarily employed to indicate the information which is actually printed by means of the printing device 25, on the surface of the article or may be operated to sequentially indicate different information or information resulting from selective operation of keys of the keyboard 18.

The output of the frequency counter 21 is also connected to a circuit 23, such as a microelectronic memory or computer plus memory, which may be employed to convert the codes received from the frequency counter to signals which are applicable to properly energize printer drive circuits forming part of an electronic chip 24 or portion of the computer memory circuits 23. Such printer drive circuits 24 are operable to provide signals for controlling a motor or plurality of motors driving the print wheels 26A, 26B, 26C, etc. to properly position the printing cuts thereof for printing the proper weight or other information on the surface of the article. Similarly, the outputs of the drive circuits 24, may be employed to properly operate a single wheel printer or ink jet head as it moves in a line or direction across the surface of the article to print a line of characters or code thereon or to effect such printing with respect to a label which is applied thereafter to the article.

The printer 25 responds to codes received from memory 23 and/or those received from the key operated switches of the keyboard 18 or from computing circuits provided in the chip or circuit board of which memory 23 forms a part and/is operable to compute the information to be printed from the signals received from the variable potentiometer 15 when the scale 11 has come to rest and signals selectively generated by the keyboard 18 indicative of cost per unit weight, destination distance or a postal zone or other variable information. In other words, the system illustrated in FIG. 2 may be operable to print such variable information as (a) weight per se, (b) cost of article, (c) postage, (d) destination, (e) combinations of such information.

The signals applied to the printer drive circuit 24 or the memory 23 may also be derived from another device such as a remote computer or hand-held manual input code generator.

When an article is placed on platform 11, its weight causes a change in the voltage output of potentiometer 15 which, in addition to that previously noted, causes a variable voltage signal to appear at capacitor 28, which is passed to an amplifier 29 which activates a timer circuit 30, such as a one-shot multivibrator which, after a suitable delay, supplies power to a solenoid 31 and when activated thereby, such solenoid advances the printer wheel assembly 25 after the printing wheels thereof have come to rest, through the cavity or opening 16 in the scale platform and causes the printing cuts of the wheels which are aligned for printing, to make contact with the bottom surface of the article or container which is disposed across such opening so as to print a requisite information on such bottom wall.

A timer 32, which may also comprise a one-shot multivibrator or other suitable means, is connected to the output of timer 30 so as to provide a signal for operating a manipulator, pusher device or conveyor for automatically removing the article from the scale platform after a suitable time delay sufficient to allow printer 25 to operate and retract from the surface of the article without smearing the printed information thereon.

- 12 -

As indicated above, if memory 23 contains a suitable computing circuit, keyboard 18 may be connected thereto to introduce variable data, such as postal or cost information, into the print computing circuit to properly energize the printer drive circuit 24 for effecting proper operation of the print wheels or other printing device to print desired information against the surface of the article or container aligned with the opening 16 in the scale platform 11.

Memory 23 and printer drive circuits 24 may be suitably modified for properly controlling the movement of a single print head, such as an ink jet printer, single printing wheel or printing ball across the opening 16 in a given direction to effect the printing of a plurality of indicia or characters representative of the information to be printed on the surface of the article disposed across the opening 16.

It is noted that the printing head 25 may also be disposed immediately adjacent the platform 11 supported by the scale housing and operable to advance against a side wall of an article disposed on the platform 11 to effect printing of the desired information thereon. In such arrangement, a stop or stops for predeterminately locating the container and retaining it on the upper surface of the platform during the printing operation, may be attached to the platform or the printing head may be properly controlled in its operation to engage and properly print characters on a side wall or the top wall of the container disposed on the platform.

In FIG. 3, a printing device 25 of the type shown in FIG. 2 or other suitable printing device of the type described, is provided as part of a conveyorized or otherwise automatic conveying system for articles defined at least in part by a plurality of conveyor belts 33A and 33B feeding articles to respective conveyor belts 34A and 34B which are aligned with the respective belts 33A and 33B a short distance therefrom between which is located the printing head 25. A common roll of 35, around which conveyor belts 34A and 34B are driven, is driven by a controlled constant speed motor 36 and such motor is controlled in its operation by the timer 32 illustrated in FIG. 2. Printer 25 is activated, as described, when motor 36 is stopped under the control of timer 32, and operates to advance its printing wheels into engagement with the bottom surface of the article disposed between conveyors 33 and 34, preferably during the interval the motor 36 is stopped in' operation. The two belt system is employed to provide a space between the belts, across which space those portions of the articles on which printing is effected extend so that the printed material will not smear as the article is continued in its conveyance.

In FIG. 4 is shown an alternate form of the invention wherein labels 37 are conveyed by a roller or belt conveyor 38 to a printing location 39 at which location such labels are individually printed by means of a printer 25 of the type described and controlled as described. The printed label then proceeds along the conveyor to the vicinity of the article, wherein

0099433

a vacuum operated manipulator head 40 engages the individual label disposed therebeneath, picks it up and carries it over an article A disposed immediately adjacent thereto on an auxiliary conveyor 41 to properly secure the label to the upper surface of the article after which the article is conveyed away from the label applying location and a second article is carried on conveyor 41 to such location. Timer 32 may be employed to control the operation of the conveyors 38 and 41 and the manipulator 40 for picking up and applying the label to the surface of the article while timer 30 illustrated in FIG. 2 may be employed to control the solenoid activating the print head 25 to print the desired information on the label disposed aligned therewith. The remaining controls illustrated in FIG. 2 are employed for controlling the operation of the printing device itself to properly print characters on the label.

It is noted that the scale weighing system may comprise a counter-balanced scale platform withthe variable potentiometer 15 replaced by a conductive elastomer, the resistivity of which decreases proportionately with the degree it is compressed by movement of the scale platform thereagainst or an extension of the scale platform such as a piston or bar, so as to serve the same function as the variable potentiometer. In such case, the elastomer may also serve as the spring element, thereby eliminating such mechanical components as the spring 12, toothed rack 13 and pinion gear 14 as well as their supporting structures and mechanisms. Such an arrangement may be employed in an operating scale per se for activating an electronic display in accordance with weight imposed against and compressing the conductive elastomer.

In yet another embodiment of the invention, such a conductive elastomer may serve primarily as the variable resistance, with the spring return of the scale effected as the result of return of a mechanical metal spring or springs employed to counterbalance the platform, to its zero or unweighed position, an arrangement in which scale components are substantially simplified and improved.

## CLAIMS

1. A weighing and marking apparatus comprising in combination with a support including a platform adapted to receive an article, means supported by said support responsive to the weight of an article disposed on said platform for generating an electrical signal which is representative of the article's weight, means for printing a plurality of indicia directly against the surface of an article disposed on said platform, control means for said printing means for varying the operation thereof to cause said printing means to vary the indicia it applies to the – surface of an article, said control means being operatively connected to said means responsive to the weight of an article so as to predeterminately vary the operation of said printing means while an article is disposed on said platform and means operable after said printing means has been predeterminately varied to permit said printing means to print indicia on the surface of an article located on said platform which indicia is indicative of the article's weight, said printing means including means for variably forming printing ink into the configuration of selected characters and means for moving said variably formed ink configurations from a first location away from the surface of an article disposed on said scale through space to a selected portion of said article's surface to dispose said ink in the configuration of said characters on the surface of said article.

2. An apparatus in accordance with Claim 1 wherein said printing means comprises an electro-mechanical variable printing device operable to impression print characters on a surface, an opening in said platform aligned with a portion of the surface of an article disposed on said platform for weighing, said electro-mechanical printing device being operable to move at least part thereof through said opening into engagement with the surface of an article disposed on said platform and upon becoming activated, to effect the printing of characters indicative of the weight of the article on the surface thereof aligned with said opening.

3. An apparatus in accordance with Claim 1 wherein said platform contains an opening therein across which opening a portion of the surface of an article being weighed on said platform extends, said printing means comprising means for generating a stream of particles and directing said particles through said opening against a surface of an article disposed across said opening in a manner so as to deposit said particles on the surface of the article in a configuration representative of the weight of the article.

4. An apparatus in accordance with Claim 1 wherein said platform contains an opening therein across which opening a portion of the surface of an article being weighed on said platform extends, said printing means comprising means for generating and directing an intense radiation beam through said opening so as to intersect the surface of an article disposed on said platform and means for variably operating said beam to cause said beam to burn the surface of an article it intersects in a configuration which is representative of the weight of the article.

5.  A weighing and printing apparatus comprising:

a support for an article to be weighed, transducing means sensitive to the weight of an article disposed on said support and operable to generate signals which vary with variations in the weight sensed thereby and which signals are representative of the weight of a particular article disposed on said support,

printing means for providing indicia which is indicative of the output of said transducing means,

first control means for variably operating said printing means to preset same to print a particular weight indication,

servo means for causing said printing means to deposit printing material on the surface of an article disposed on said support and to effect the printing thereon of characters, and

means for operating said first control means and said servo means in sequence after disposing an article on said support to effect the printing of indicia on a surface of said article.

6.  An apparatus in accordance with Claim 5 wherein said support contains an upper surface on which articles to be weighed are disposed, an opening in said upper surface, said printing means being disposed within said opening beneath said upper surface, said servo means being operable to move said printing means upwardly through said opening to engage the bottom surface of an article disposed on said upper surface across the opening herein.

7. An apparatus in accordance with Claim 5 including means for supporting an article on said support with a surface of said article aligned with said printing means whereby operation of said servo means will bring said printing means into engagement with said surface.

8. An apparatus in accordance with Claim 5 wherein said printing means comprises particle dispensing means and means for controlling dispensed particles to deposit indicia on said article.

9. A method of marking articles such as product containers with recorded information which varies in accordance with the weight of the articles comprising:

    (a)   disposing an article to be marked on the platform of a scale with at least a portion of the surface of the article predeterminately located on said scale platform and said article exerting its full weight against the scale platform,

    (b)   sensing said article on said scale and variably controlling a marking means for said article in accordance with the weight of said article to operatively deposit a marking material against a select portion of the surface of said article in a pattern defining an indicia which may be visual read and an indication of the article's weight.

10. A method in accordance with Claim 9 wherein said marking means is operable to propel said marking material through space therefrom against the surface of said article disposed on said platform in a predetermined pattern thereon.

11. A method in accordance with Claim 9 wherein said marking means is operable to engage and print said indicia against a select portion of the surface of said article.

12. A method in accordance with Claim 11 wherein said marking means comprises a support and plurality of separately driveable printing wheels each containing a plurality of indicia and means for predeterminately controlling said printing wheels in accordance with the weight of the article to align respective indicia by printing location, further comprising controlling relative movement between said plurality of printing wheels and a surface of said article when said printing wheels are properly aligned to effect the printing engagement of select portions of said wheels against a select portion of the surface of said article for printing indicia of predetermined configuration thereon.

13. A method in accordance with Claim 9 wherein said printing means is located beneath the platform of the scale used

0099433

to weigh said article and is operatively moveable upward into engagement with a surface of said article, said method including engaging said printing means against select portion of the surface of said article when all of said wheels of said printing means are properly aligned for printing an indication of the weight of said article on the surface thereof.

0099433

Fig.1.

Fig. 3.

Fig.4.

Fig.2.

0099433

European Patent Office

**EUROPEAN SEARCH REPORT**

Application number

EP 82 30 3852

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | | | G 01 G 23/42 |
| X | PATENTS ABSTRACTS OF JAPAN, vol. 2, no. 134, 9th November 1978, page 8356 E 78; & JP - A - 53 102 781 (RICOH K.K.) (07-09-1978) *Abstract* | 1,3,9-11 | |
| X | US-A-3 994 217 (J.R.ARCHILA) *Column 1, lines 31-68; column 2, lines 1-4; claims 1-11* | 1,5,9 11 | |
| Y | US-A-4 316 073 (H.LEMELSON) *Column 1, lines 32-45* | 1,4 | |
| Y | US-A-3 811 522 (L.WOLF et al.) *Claim 1* | 1 | |
| A | GB-A-2 076 549 (TERAOKA SEIKOSHO CO.) *Claim 1* | 1 | TECHNICAL FIELDS SEARCHED (Int. Cl. ³) G 01 G B 65 B B 65 C |
| A | US-A-4 035 808 (C.KARP) *Claim 1* | 1 | |
| A | US-A-4 101 366 (K.TERAOKA) *Abstract* | 1 | |
| A | GB-A-2 075 695 (IMPERIAL CHEMICAL INDUSTRIES LIMITED) *Abstract* | 1 | |

The present search report has been drawn up for all claims

| Place of search THE HAGUE | Date of completion of the search 18-03-1983 | Examiner VAN DEN BULCKE E. |
|---|---|---|